# EUROPEAN PATENT SPECIFICATION

(11) **EP 3 984 778 B1**
(45) Date of publication and mention of the grant of the patent: **01.01.2025**
(21) Application number: 20823496.3
(22) Date of filing: 11.06.2020
(51) Int. Cl.: B60C 11/12, B60C 11/13, B60C 11/24, B60C 11/03

(54) **PNEUMATIC TIRE**
LUFTREIFEN
PNEUMATIQUE

(30) Priority: 14.06.2019 JP 2019111353
(43) Date of publication of application: 20.04.2022
(73) Proprietor: BRIDGESTONE CORPORATION, Chuo-ku Tokyo 104-8340 (JP)
(72) Inventor: HASEGAWA, Kohei, Tokyo 104-8340 (JP)
(74) Representative: Marks & Clerk LLP
(86) International application number: PCT/JP2020/023087
(87) International publication number: WO 2020/250992

(56) References cited:
- EP-A1- 3 368 341
- WO-A1-2017/103457
- WO-A1-2017/103460
- JP-A- 2003 159 910
- JP-A- 2014 097 697
- JP-A- 2014 522 772
- JP-A- 2014 523 366
- JP-A- 2016 501 769
- JP-A- 2017 193 222
- JP-A- H05 254 314
- JP-A- H11 151 913

## Description

### [Technical Field]

The present invention relates to a pneumatic tire for use as a wheel of a vehicle.

### [Background Art]

Available is an example in which a tire having a plurality of circumferential grooves extending in a tire circumferential direction formed on a tire tread by taking drainage into consideration has formed thereon land portions that are partitioned by the circumferential grooves and extend in the tire circumferential direction and on which widthwise fine grooves of a small groove width extending in the tire widthwise direction are formed, to suppress reduction of the rigidity of the land portions and secure drainage and edge components and thereby achieve improved friction force with the road surface (wet grip performance) (for example, refer to Patent Document 1). Attention is also drawn to the disclosure of WO2017/074736A1.

### [Prior Art Document]

### [Patent Document]

Patent Document 1: JP 2015-83466 A

In the tire disclosed in Patent Document 1, five land portions are formed on the tire tread by being partitioned by four circumferential grooves extending in the circumferential direction.

The land portions include a center land portion in a center region in the middle in the tire widthwise direction, shoulder land portions in the opposite end shoulder regions in the tire widthwise direction, and second land portions between the center land portion and the shoulder land portions.

While the center land portion and the second land portions have formed thereon widthwise grooves (sipes, wide grooves) extending in the tire widthwise direction, such widthwise grooves are not formed on the shoulder land portions.

The widthwise fine grooves (sipes) having a small groove width can suppress reduction of the rigidity of the land portions by closing when the tire touches the ground, while securing drainage and edge components.

### [Summary of the Invention]

### [Underlying Problem to be solved by the Invention]

In a pneumatic tire that rotates while supporting a vehicle, in a case where it is a pneumatic tire that is mounted on a driving wheel that is rotated by power transmitted thereto, wear progresses more quickly in the center region of the tire tread which is acted upon by a high ground contact pressure and to which friction force by rotation is applied, than in the shoulder regions.

On the other hand, in the case of a pneumatic tire mounted on a steering wheel that is steered, wear progresses more quickly in the shoulder regions of the tire tread, to which high friction force by steering of the tire tread is applied, than in the center region.

Through travel of a vehicle, a pneumatic tire indicates a difference in wear rate between the center region and the shoulder regions as described above, and the wear becomes unbalanced, or in other words, uneven wear occurs.

Especially, although uneven wear does not stand out very much until the middle stage of wear, after the middle stage of wear, uneven wear usually starts to stand out, which degrades the merchantability and is not favorable also in terms of quality.

In the tire disclosed in Patent Document 1, widthwise fine grooves are not formed on the shoulder land portions, and the shoulder land portions are normally higher in rigidity than the center land portion. Thus, in a case where the tire is mounted on a driving wheel, the center land portion having lower rigidity is higher in progress of wear than the shoulder regions.

Although, even with this, the uneven wear does not stand out until the middle stage of wear, after the middle stage of wear, the wear at the center land portion progresses more and more, and uneven wear comes to stand out.

Further, Patent Document 1 is inferior in drainage in the shoulder regions because widthwise fine grooves are not formed on the shoulder land portions.

The present invention has been made by taking such points as described above into consideration, and an object of the present invention resides in provision of a pneumatic tire that can suppress uneven wear after the middle stage of wear while a wet grip performance is normally kept good.

### [Means to solve the Problem]

In order to achieve the object described above, the present invention provides a pneumatic tire as claimed in claim 1.

According to this configuration, in the state in which the tire is worn to a depth of 50% of the depth from the tread treading face of an unused tire to the end face of the tread wear indicator, the inner side land portion cross sectional area ratio is higher than the outer side land portion cross sectional area ratio. Thus, the inner side land portion is higher in rigidity than the outer side land portion, and in a case where the pneumatic tire is mounted on a driving wheel that is rotated by power transmitted thereto, after the middle stage of wear, the progress of wear of the inner side land portion is suppressed than that of the outer side land portion, and uneven wear can be suppressed. Consequently, the merchantability and the quality can be maintained.

Further, although the widthwise fine groove of a small groove width formed on the land portions is, when the tire touches the ground, shut up at a groove portion thereof on the tread treading face side by compressive deformation of the land portions, since the widthwise fine groove has the widened groove portion having an increased groove width on the groove bottom thereof, also after the middle stage of wear, the widened groove portion is maintained. Consequently, the drainage is secured by the widened groove portion, and the wet grip performance can be kept good together with edge components.

In a preferred embodiment of the present invention,
the widened groove portion of the widthwise fine groove on the inner side land portion is smaller in groove width than the widened groove portion of the widthwise fine groove on the outer side land portion.

According to this configuration, since the widened groove portion of the widthwise fine groove on the inner side land portion is smaller in groove width than the widened groove portion of the widthwise fine groove on the outer side land portion, in the state in which the tire is worn to a depth of 50% of the depth from the tread treading face of an unused tire to the end face of the tread wear indicator, the inner side land portion cross sectional area ratio can easily be made higher than the outer side land portion cross sectional area ratio. Thus, the inner side land portion is higher in rigidity than the outer side land portion, and in a case where the pneumatic tire is mounted on a driving wheel that is rotated by power transmitted thereto, after the middle stage of wear, the progress of wear of the inner side land portion is suppressed than that of the outer side land portion, and uneven wear can be suppressed.

In a preferred embodiment of the present invention,
the widthwise fine groove on the inner side land portion is smaller in number than the widthwise fine groove on the outer side land portion.

According to this configuration, since the widthwise fine groove on the inner side land portion is smaller in number than the widthwise fine groove on the outer side land portion, in the state in which the tire is worn to a depth of 50% of the depth from the tread treading face of an unused tire to the end face of the tread wear indicator, the inner side land portion cross sectional area ratio can be made higher than the outer side land portion cross sectional area ratio easily. Thus, the inner side land portion is higher in rigidity than the outer side land portion, and in a case where the pneumatic tire is mounted on a driving wheel that is rotated by power transmitted thereto, after the middle stage of wear, the progress of wear of the inner side land portion is suppressed than that of the outer side land portion, and uneven wear can be suppressed.

In a preferred embodiment of the present invention,
the widthwise fine groove on the outer side land portion on an outermost side in the tire widthwise direction among the land portions is shaped so as to have a groove width that gradually increases from a tread treading face of an unused tire to a maximum width of the widened groove portion.

According to this structure, since the widthwise fine groove on the outer side land portion on the outermost side in the tire widthwise direction among the land portions is shaped so as to have the groove width that gradually increases from the tread treading face of an unused tire to the maximum width of the widened groove portion, in a case where the pneumatic tire is mounted on a driving wheel, after the middle stage of wear in which uneven wear starts to stand out, the ware rate of the outer side land portion on the outermost side gradually becomes higher, resulting in a reduced difference in rate from the wear rate of the middle inner side land portion in which the rate of the progress is higher. By this, uneven wear can be suppressed further, and after the middle stage of wear, the uneven wear can be made less likely to stand out.

In a preferred embodiment of the present invention,
the pneumatic tire is mounted on a driving wheel of a vehicle.

Since the pneumatic tire is mounted on a driving wheel of a vehicle, after the middle stage of wear, the progress of wear of the inner side land portion is suppressed than that of the outer side land portion, uneven wear can be suppressed, and the merchantability and the quality can be maintained.

### [Effects of the Invention]

According to the present invention, in the state in which the tire is worn to a depth of 50% of the depth from the tread treading face of an unused tire to the end face of the tread wear indicator, the inner side land portion cross sectional area ratio is higher than the outer side land portion cross sectional area ratio. Thus, the inner side land portion is higher in rigidity than the outer side land portion, and in a case where the pneumatic tire is mounted on a driving wheel that is rotated by power transmitted thereto, after the middle stage of wear, the progress of wear of the inner side land portion is suppressed than that of the outer side land portion, and uneven wear can be suppressed. Consequently, the merchantability and the quality can be maintained.

Since the widthwise fine groove formed on the land portions has the widened groove portion having an increased groove width on the groove bottom thereof, also after the middle stage of wear, drainage is secured by the widened groove portion until the last stage of wear. Consequently, the wet grip performance can be kept good together with edge components.

### [Brief Description of Drawings]

FIG. 1 is a tire widthwise cross sectional view of a pneumatic tire according to an embodiment of the present invention.
FIG. 2 is a partial plan view of the tread of the pneumatic tire.
FIG. 3 is a partial cross sectional view, taken along a plane perpendicular to the tire widthwise direction (cross section taken along line III-III of FIG. 2), of a tire circumferential cross section of an inner side land portion in the middle stage of wear of the tread.
FIG. 4 is a partial cross sectional view of a tire circumferential cross section of an outer side land portion in the middle stage of wear of the tread (cross section taken along line IV-IV of FIG. 2).
FIG. 5 is a partial plan view of the tread of a pneumatic tire according to another embodiment.
FIG. 6 is a partial cross sectional view of a tire circumferential cross section of an inner side land portion in the middle stage of wear of the tread (cross section taken along line VI-VI of FIG. 5).
FIG. 7 is a partial cross sectional view of a tire circumferential cross section of an outer side land portion in the middle stage of wear of the tread (cross section taken along line VII-VII of FIG. 5).
FIG. 8 is a partial cross sectional view of a tire circumferential cross section of an inner side land portion in the middle stage of wear of the tread of a pneumatic tire according to a further embodiment.
FIG. 9 is a partial cross sectional view of a tire circumferential cross section of an outer side land portion in the middle stage of wear of the tread.
FIG. 10 is a partial plan view of the tread of a pneumatic tire according to the other embodiment.

### [Modes for carrying out the Invention]

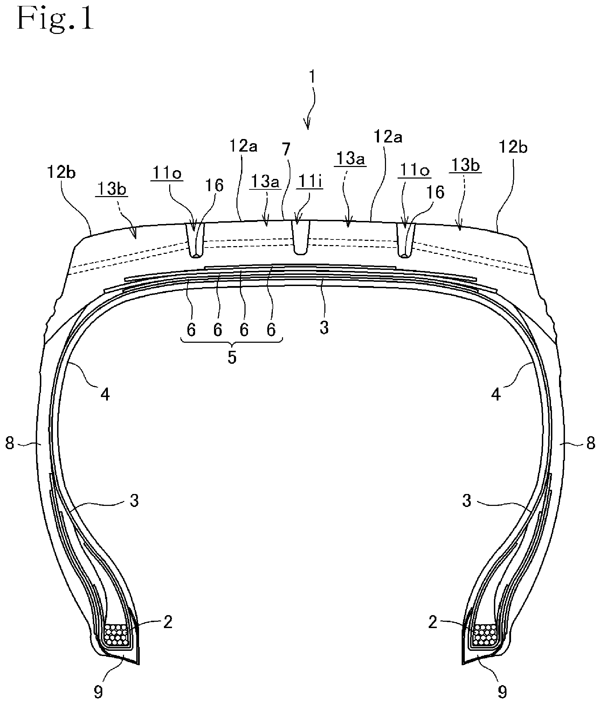

In the following, an embodiment according to the present invention is described with reference to FIGS. 1 to 4.

FIG. 1 is a tire widthwise cross sectional view of a pneumatic tire 1 according to the present embodiment (cross sectional view when the pneumatic tire 1 is taken along a plane including the tire rotation center axis) that is a radial tire for heavy load for a truck or a bus.

The pneumatic tire 1 includes a pair of left and right bead rings 2 each formed from a metal wire wound in a ring shape and a carcass ply 3 formed with the opposite side edges thereof wound on the bead rings 2 while a portion thereof between the opposite side edges swells to the outer side in a tire diametrical direction such that the carcass ply 3 has a toroidal shape.

An air permeable inner liner portion 4 is formed on the inner surface of the carcass ply 3.

A plurality of belt plies 6 are placed one on another and wound on an outer periphery of a crown portion of the carcass ply 3 to form a belt layer 5, and a tread 7 is formed on the outer side of the belt layer 5 in the tire diameter direction in such a manner as to cover the belt layer 5.

The belt layer 5 is formed from the belt plies 6 placed one on another in a plurality of layers, and each belt ply 6 is formed from belt cords covered with belt rubber and formed in a belt shape.

A side wall portion 8 is formed on an outer surface of the opposite side portions of the carcass ply 3.

A bead portion 9 covers an annular end portion of the carcass ply 3 wound and folded back on each bead ring 2 and is continuous on the inner side thereof to the inner liner portion 4 and on the outer side thereof to the side wall portion 8.

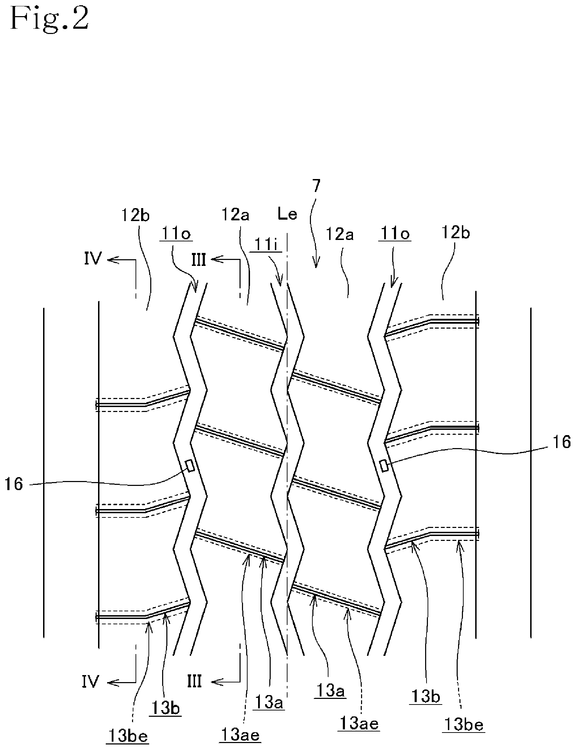

Referring to FIG. 1 and FIG. 2 that is a partial plan view of the tread 7, a middle circumferential groove 11i is formed on a tire equator line Le in the middle in a tire widthwise direction on the tread 7 such that it extends in a tire circumferential direction, and on the opposite sides in the tire widthwise direction of the middle circumferential groove 11i, outer side circumferential grooves 11o are formed such that they individually extend in the tire circumferential direction.

The middle circumferential groove 11i and the outer side circumferential grooves 11o extend in the tire circumferential direction in zigzag patterns while swinging in the tire widthwise direction.

Four land portions 12b, 12a, 12a, and 12b are formed by being partitioned by the three circumferential grooves 11o, 11i, and 11o and extend in the tire circumferential direction.

The inner side land portions 12a are formed by being partitioned by the middle circumferential groove 11i and the outer side circumferential grooves 11o, and the outer side land portions 12b are formed in the shoulder regions on the outer sides in the tire widthwise direction by being partitioned by the outer side circumferential grooves 11o.

The inner side land portions 12a have, on the opposite inner and outer sides thereof in the tire widthwise direction, side walls that vary in zigzag patterns.

The outer side land portions 12b in the shoulder regions have, on the inner side thereof in the tire widthwise direction, a side wall that varies in a zigzag pattern.

On the land portions 12b, 12a, 12a, and 12b, a plurality of widthwise fine grooves 13b, 13a, 13a, and 13b extending in the tire widthwise direction are formed in the tire circumferential direction and have a small groove width.

The inner side widthwise fine grooves 13a on the inner side land portions 12a extend to and are communicated at the opposite ends thereof with the middle circumferential groove 11i and the outer side circumferential grooves 11o.

The outer side widthwise fine grooves 13b on the outer side land portions 12b are communicated at one end thereof with the outer side circumferential grooves 11o and extend at the other end thereof to an outer side face of the outer side land portions 12b on the shoulder regions.

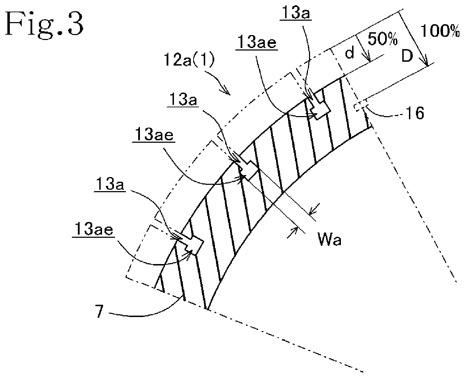

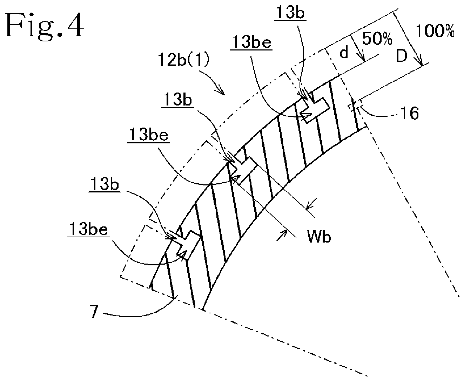

Referring to FIGS. 3 and 4, the widthwise fine grooves 13b, 13a, 13a, and 13b respectively have widened groove portions 13be, 13ae, 13ae, and 13be having an increased groove width at the groove bottom thereof.

The widened groove portions 13be, 13ae, 13ae, and 13be have a rectangular cross section.

The widened groove portions 13ae of the inner side widthwise fine grooves 13a have a smaller width than the widened groove portions 13be of the outer side widthwise fine grooves 13b.

Several tread wear indicators 16 each in the form of a protrusion projecting slightly by a predetermined amount from the groove bottom are formed at different locations in the tire circumferential direction in the outer side circumferential grooves 11o of the present tread 7.

When the wear of the tread 7 progresses as a result of traveling until the tread treading face comes to be in flush with the projecting end face of the tread wear indicators 16, it is determined that this indicates 100% wear and the wear is terminal.

Referring to FIGS. 3 and 4, the degree of progress of wear is indicated by the ratio (d/D) of the depth d of wear from the tread treading face of an unused tire to the tread treading face in which the wear has progressed to the depth D from the tread treading face of an unused tire to the projecting end face of the tread wear indicators 16.

In short, the depth d of wear reaching the depth D corresponds to 100% wear.

Accordingly, the depth d of wear in the middle stage of wear reaching the half depth D/2 of the depth D corresponds to 50% wear.

Part of a tread annular cross section where the inner side land portion 12a is cut along a plane perpendicular to the tire widthwise direction in a 50% wear state in which the tire is worn from the tread treading face of an unused tire to a depth of 50% of the depth D to an end face of the tread wear indicator 16 is depicted in FIG. 3.

Further, part of a tread annular cross section where the outer side land portion 12b is cut along the plane perpendicular to the tire widthwise direction in the 50% wear state is depicted in FIG. 4.

In FIGS. 3 and 4, a tread annular cross section in the 50% wear state within a range of approximately 40 degrees by a central angle is indicated by solid lines, and a tread annular cross section of an unused tire is indicated by a dashed line.

On the tread annular cross section of the inner side land portion 12a depicted in FIG. 3, three widthwise fine grooves 13a are formed in an equally spaced relationship with each other in the circumferential direction within a range of a center angle of 40 degrees.

Each of the widthwise fine grooves 13a has a widened groove portion 13ae of a rectangular cross section having an increased groove width at the groove bottom thereof.

On the tread annular cross section of the outer side land portion 12b depicted in FIG. 4, three widthwise fine grooves 13b are formed in an equally spaced relationship with each other in the circumferential direction within a range of a center angle of 40 degrees.

Each of the widthwise fine grooves 13b has a widened groove portion 13be of a rectangular cross section having an increased groove width at the groove bottom thereof.

When the widened groove portion 13ae of the widthwise fine groove 13a on the inner side land portion 12a depicted in FIG. 3 and the widened groove portion 13be of the widthwise fine groove 13b on the outer side land portion 12b depicted in FIG. 4 are compared with each other, although both of them have cross sectional rectangular shapes of an equal groove depth, the groove width Wa of the widened groove portion 13ae of the inner side land portion 12a is smaller than the groove width Wb of the widened groove portion 13be of the outer side land portion 12b.

The widthwise fine groove 13a of the inner side land portion 12a and the widthwise fine groove 13b of the outer side land portion 12b have the same shape except the widened groove portions 13ae and 13be.

Accordingly, in the 50% wear state of the tread 7, the cross sectional area of the widthwise fine groove 13a of the inner side land portion 12a is smaller than the cross sectional area of the widthwise fine groove 13b of the outer side land portion 12b.

Referring to FIG. 3, in the 50% wear state of the tread 7, the ratio, to an annular cross sectional area (annular cross sectional area including a portion indicated by slanting lines in FIG. 3 with the widthwise fine grooves 13a added thereto) S including the widthwise fine grooves 13a in a tread annular cross section of the inner side land portion 12a, of an annular cross sectional area (annular cross sectional area of the portion indicated by slanting lines in FIG. 3) Sa that does not include the widthwise fine grooves 13a is determined as an inner side land portion cross sectional area ratio Pa (= Sa/S).

Similarly, referring to FIG. 4, in the 50% wear state of the tread 7, the ratio, to an annular cross sectional area (annular cross sectional area including a portion indicated by slanting lines in FIG. 4 with the widthwise fine grooves 13b added thereto) S' including the widthwise fine grooves 13b in a tread annular cross section of the outer side land portion 12b, of an annular cross sectional area (annular cross sectional area of the portion indicated by slanting lines in FIG. 4) Sb that does not include the widthwise fine grooves 13b is determined as an outer side land portion cross sectional area ratio Pb (= Sb/S').

When the inner side land portion cross sectional area ratio Pa (Sa/S) and the outer side land portion cross sectional area ratio Pb (= Sb/S') described above are compared with each other, since the total cross sectional area of the widthwise fine grooves 13a is smaller than the total cross sectional area of the widthwise fine grooves 13b, the inner side land portion cross sectional area ratio Pa is higher than the outer side land portion cross sectional area ratio Pb (Pa > Pb) .

Since, in the 50% wear state of the tread 7, the inner side land portion cross sectional area ratio Pa is higher than the outer side land portion cross sectional area ratio Pb, the inner side land portion 12a is higher in rigidity than the outer side land portion 12b.

In a pneumatic tire mounted on a driving wheel that is rotated by power transmitted thereto in a vehicle, a center region of the tire tread which is acted upon by a high ground contact pressure and to which friction force by rotation is applied undergoes wear whose progress is faster than that in the shoulder regions. Especially after the middle stage of wear, uneven wear normally starts to stand out.

Since, in the present pneumatic tire 1, in the 50% wear state, the inner side land portion 12a in the center region is higher in rigidity than the outer side land portions 12b in the shoulder regions, in a case where the pneumatic tire 1 is mounted on a driving wheel, the progress of wear of the inner side land portion 12a in the center region can be suppressed than that of the outer side land portions 12b in the shoulder regions after the middle stage of wear in which uneven wear starts to stand out, and the merchantability and the quality of the tire can be maintained.

Since the widthwise fine grooves 13a and 13b formed on the land portions 12a and 12b have the widened groove portions 13ae and 13be of an increased groove width at the groove bottom thereof, respectively, not only in the early stage of wear but also after the middle stage of wear, the widened groove portions 13ae and 13be are maintained, and drainage is secured by the widened groove portions 13ae and 13be. Consequently, the wet grip performance can be kept good together with edge components.

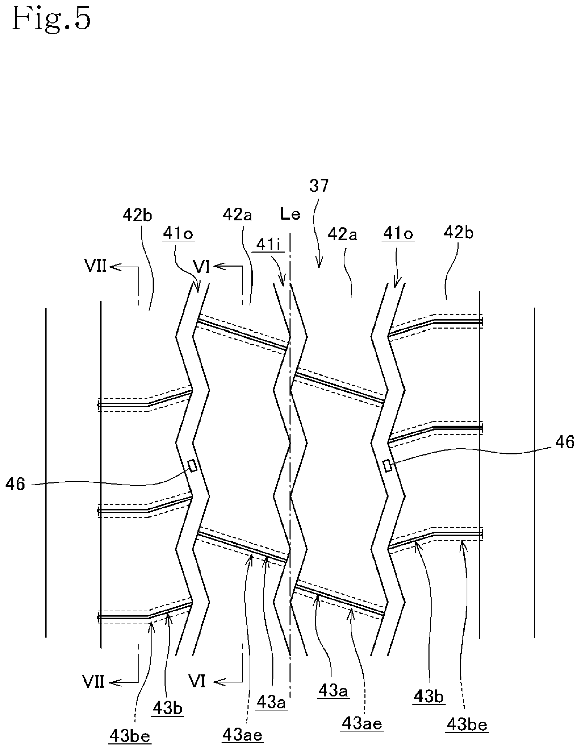

Now, a pneumatic tire 31 according to another embodiment is described with reference to FIGS. 5 to 7.

On a tread 37 of the pneumatic tire 31, a middle circumferential groove 41i and outer side circumferential grooves 41o having shapes same as those of the middle circumferential groove 11i and the outer side circumferential grooves 11o of the tread 7, respectively, are formed, and four land portions including inner side land portions 42a in the center region and outer side land portions 42b in the shoulder regions are formed by being partitioned by the three circumferential grooves 41o, 41i, and 41o (refer to FIG. 5).

In the outer side circumferential grooves 41o of the present tread 37, several tread wear indicators 46 that are protrusions projecting slightly by a predetermined amount from the groove bottom are formed at different locations in the tire circumferential direction.

Referring to FIG. 5, on the land portions 42b, 42a, 42a, and 42b, a plurality of widthwise fine grooves 43b, 43a, 43a, and 43b of a small groove width are formed in the tire circumferential direction such that they individually extend in the tire widthwise direction.

The inner side widthwise fine grooves 43a on the inner side land portions 42a extend to and are communicated at the opposite ends thereof with the middle circumferential groove 41i and the outer side circumferential grooves 41o.

The outer side widthwise fine grooves 43b on the outer side land portions 42b are communicated at one end thereof with the outer side circumferential grooves 41o and extend at the other end thereof to outer side faces of the outer side land portions 42b on the shoulder regions.

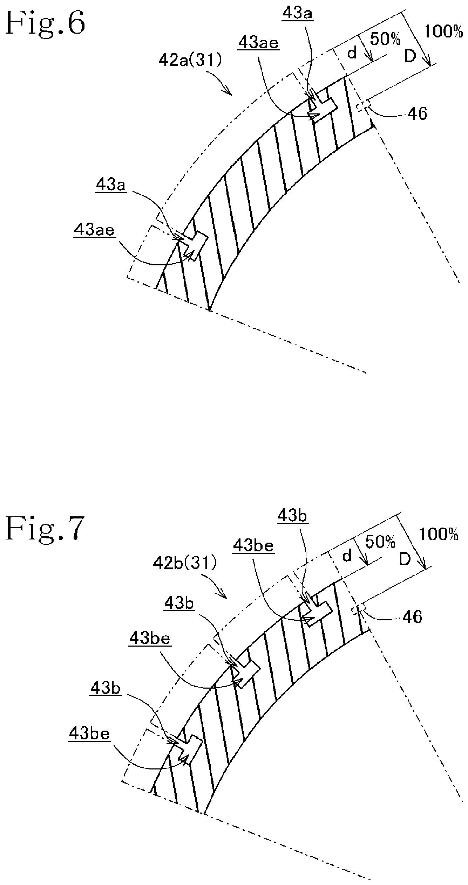

Referring to FIGS. 6 and 7, the widthwise fine grooves 43b, 43a, 43a, and 43b have widened groove portions 43be, 43ae, 43ae, and 43be of an increased groove width at the groove bottom thereof, respectively.

The widened groove portions 43be, 43ae, 43ae, and 43be have a rectangular cross section.

As depicted in FIGS. 6 and 7, the inner side widthwise fine grooves 43a and the outer side widthwise fine grooves 43b have the same cross sectional shape together with the widened groove portions 43ae and 43be.

However, in a tread annular cross section of the inner side land portion 42a depicted in FIG. 6, two widthwise fine grooves 43a are formed in a spaced relationship with each other in the circumferential direction within a range of a center angle of 40 degrees.

In contrast, in a tread annular cross section of the outer side land portion 42b depicted in FIG. 7, three widthwise fine grooves 43b are formed in an equally spaced relationship with each other in the circumferential direction within a range of a center angle of 40 degrees.

Accordingly, the number of the widthwise fine grooves 43a on the inner side land portion 42a is smaller than that of the widthwise fine grooves 43b on the outer side land portion 42b.

Thus, in the 50% wear state of the tread 37, the cross sectional area of the widthwise fine grooves 43a on the inner side land portions 42a is smaller than the cross sectional area of the widthwise fine grooves 43b on the outer side land portions 42b.

Referring to FIG. 6, in the 50% wear state of the tread 37, the ratio, to an annular cross sectional area (annular cross sectional area including a portion indicated by slanting lines in FIG. 6 with the widthwise fine grooves 43a added thereto) S including the widthwise fine grooves 43a in a tread annular cross section of the inner side land portion 42a, of an annular cross sectional area (annular cross sectional area of the portion indicated by slanting lines in FIG. 6) Sa that does not include the widthwise fine grooves 43a is determined as an inner side land portion cross sectional area ratio Pa (= Sa/S).

Similarly, referring to FIG. 7, in the 50% wear state of the tread 7, the ratio, to an annular cross sectional area (annular cross sectional area including a portion indicated by slanting lines in FIG. 7 with the widthwise fine grooves 13a added thereto) S' including the widthwise fine grooves 43a in a tread annular cross section of the outer side land portion 42b, of an annular cross sectional area (annular cross sectional area of a portion indicated by slanting lines in FIG. 7) Sb that does not include the widthwise fine grooves 43a is determined as an outer side land portion cross sectional area ratio Pb (= Sb/S').

When the inner side land portion cross sectional area ratio Pa (Sa/S) and the outer side land portion cross sectional area ratio Pb (= Sb/S') described above are compared with each other, since the total cross sectional area of the widthwise fine grooves 43a is smaller than the total cross sectional area of the widthwise fine grooves 43b, the inner side land portion cross sectional area ratio Pa is higher than the outer side land portion cross sectional area ratio Pb (Pa > Pb) .

Since, in the 50% wear state of the tread 37, the inner side land portion cross sectional area ratio Pa is higher than the outer side land portion cross sectional area ratio Pb, the inner side land portion 42a is higher in rigidity than the outer side land portion 42b.

Since, in the present pneumatic tire 31, in the 50% wear state, the inner side land portion 42a in the center region is higher in rigidity than the outer side land portions 42b in the shoulder regions, in a case where the present pneumatic tire 31 is mounted on a driving wheel, the progress of wear of the inner side land portion 42a in the center region can be suppressed than that of the outer side land portion 42b in the shoulder region after the middle stage of wear in which uneven wear starts to stand out, and the merchantability and the quality of the tire can be maintained.

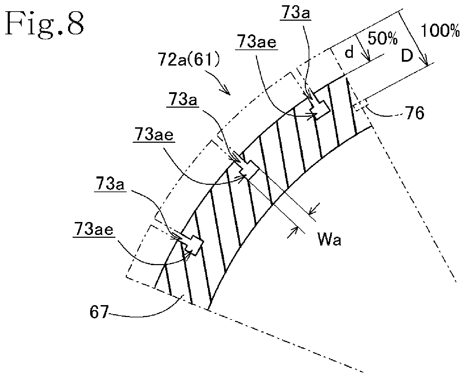

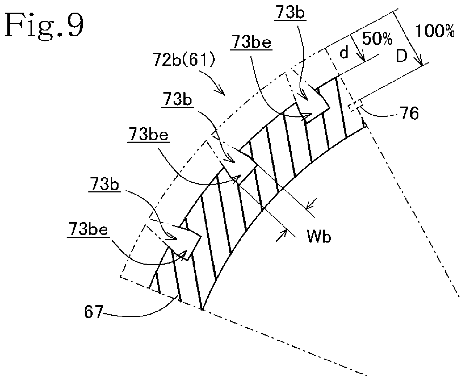

Now, a pneumatic tire 61 according to a further embodiment is described with reference to FIGS. 8 and 9.

The pneumatic tire 61 according to the present embodiment has a structure substantially similar to that of the pneumatic tire 1 according to the embodiment described hereinabove except that the cross sectional shape of the outer side widthwise fine grooves is different.

In the outer side circumferential groove of the present tread 67, several tread wear indicators 76 that are protrusions projecting slightly by a predetermined amount from the groove bottom are formed at different locations in the tire circumferential direction.

FIG. 8 is a partial sectional view, taken along a plane perpendicular to the tire widthwise direction, of a tire circumferential cross section of an inner side land portion 72a in the middle stage of wear of the tread 67.

Inner side widthwise fine grooves 73a formed on the inner side land portion 72a are substantially the same as the inner side widthwise fine grooves 13a described hereinabove, including the widened groove portions 73ae on the groove bottom.

FIG. 9 is a partial cross sectional view, taken along a plane perpendicular to the tire widthwise direction, of a tire circumferential cross section of the outer side land portion 72b on the outermost side in the middle stage of wear of the tread 67.

The outer side widthwise fine grooves 73b formed on the outer side land portion 72b have such a shape that the groove width thereof gradually increases from the tread treading face of the outer side land portion 72b to the maximum width of the widened groove portion 73be of the groove bottom.

Accordingly, in a case where the present pneumatic tire 61 is mounted on a driving wheel, after the middle stage of wear in which uneven wear starts to stand out, the ware rate of the outer side land portion 72b on the outermost side gradually becomes higher, resulting in a reduced difference in rate from the wear rate of the middle inner side land portion 72a in which the rate of the progress is higher. By this, the uneven wear can be suppressed further, and after the middle stage of wear, the uneven wear can be made less likely to stand out.

While the pneumatic tires according to the three embodiments according to the present invention have been described, the mode of the present invention is not necessarily limited to the embodiments but only to the appended claims.

It is to be noted that, in regard to an inner side land portion and an outer side land portion in the present invention, in a case where three or more land portions are present on one side in the tire widthwise direction with respect to a tire equator line, the land portion on the tire equator line side between two land portions adjacent to each other on one side in the tire widthwise direction among the three or more land portions is the inner side land portion, and the land portion on the outer side in the tire widthwise direction of the inner side land portion is the outer side land portion.

Accordingly, the land portions lined up in order on the tire equator line side from the land portion on the outermost side in the tire widthwise direction have rigidities that increase toward the tire equator line side.

In the present embodiments, the widened groove portion provided on the groove bottom of the widthwise fine grooves formed on the land portions may have a circular or oval cross section.

Further, while, in the present embodiments, the circumferential main groove is formed such that it extends in a zigzag pattern in the tire circumferential direction while swinging in the tire widthwise direction, it may otherwise be formed such that it extends linearly in the tire circumferential direction without swinging in the tire widthwise direction.

Although, in the present embodiments, four land portions extending in the tire circumferential direction are defined by three circumferential main grooves, the form that can be taken by the circumferential main grooves and so forth is not limited to this, and three or more circumferential main grooves may be formed.

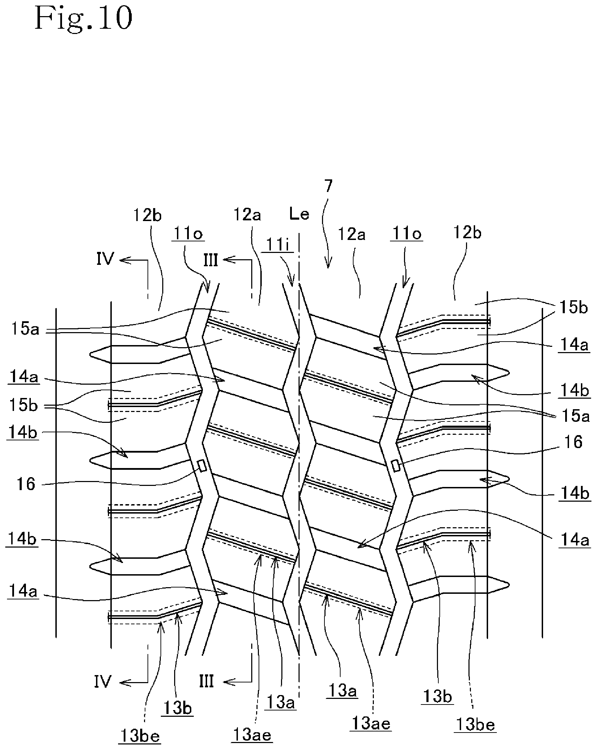

Further, although, in the present embodiments, a plurality of land portions partitioned by a plurality of circumferential grooves are rib-like land portions extending continuously in the tire circumferential direction, they may be formed otherwise in such a form that, as depicted in FIG. 10, widthwise fine grooves 13a and 13b extending in the tire widthwise direction are formed on block-shaped land portions 15a and 15b partitioned by widthwise grooves 14a and 14b extending in the tire widthwise direction together with circumferential grooves.

In FIG. 10, reference signs of the embodiment depicted in FIG. 2 are applied.

It is to be noted that the pneumatic tire of the present invention can be applied not only as a tire for a truck or a bus but also as a tire for a passenger car.

### [Reference Signs List]

Le: Tire equator line
1: Pneumatic tire
2: Bead ring
3: Carcass ply
4: Inner liner portion
5: Belt layer
6: Belt ply
7: Tread
8: Side wall portion
9: Bead portion
11i: Middle circumferential groove
11o: Outer side circumferential groove
12a: Inner side land portion
12b: Outer side land portion
13a: Inner side widthwise fine groove
13ae: Widened groove portion
13b: Outer side widthwise fine groove
13be: Widened groove portion
14a, 14b: Widthwise groove
15a, 15b: Block-shaped land portion
16: Tread wear indicator
31: Pneumatic tire
37: Tread
41i: Middle circumferential groove
41o: Outer side circumferential groove
42a: Inner side land portion
42b: Outer side land portion
43a: Inner side widthwise fine groove
43ae: Widened groove portion
43b: Outer side widthwise fine groove
43be: Widened groove portion
46: Tread wear indicator
61: Pneumatic tire
67: Tread
72a: Inner side land portion
72b: Outer side land portion
73a: Inner side widthwise fine groove
73ae: Widened groove portion
73b: Outer side widthwise fine grooves
73be: Widened groove portion
76: Tread wear indicator

## Claims

1. A pneumatic tire comprising:
a plurality of land portions (12a, 12b; 42a, 42b; 72a, 72b) formed on a tread (7) of the tire by being partitioned by a plurality of circumferential grooves (11i, 11o) that extend in a tire circumferential direction, the plurality of land portions (12a, 12b; 42a, 42b; 72a, 72b) extending in the tire circumferential direction; and
a plurality of widthwise fine grooves (13a, 13b; 43a, 43b; 73a, 73b) that are formed on the land portions (12a, 12b; 42a, 42b; 72a, 72b) and that extend in a tire widthwise direction, wherein
a corresponding one of the widthwise fine grooves (13a, 13b; 43a, 43b; 73a, 73b) has a widened groove portion (13ae, 13be; 43ae, 43be; 73ae, 73be) being provided on a groove bottom thereof and having an increased groove width, and,
where, among adjacent ones of the land portions (12a, 12b; 42a, 42b; 72a, 72b) on one side in the tire widthwise direction with respect to a tire equator line (Le) in a middle in the tire widthwise direction, a corresponding one of the land portions on the tire equator line (Le) side is determined as an inner side land portion (12a; 42a; 72a) and a corresponding one of the land portions on an outer side in the tire widthwise direction is determined as an outer side land portion (12b; 42b; 72b),
the pneumatic tire being **characterised in that**:
when an inner side land portion cross sectional area ratio (Pa) and an outer side land portion cross sectional area ratio (Pb) are compared with each other in a state in which the tire is worn to a depth of 50% of a depth from a tread treading face of an unused tire to an end face of a tread wear indicator (16), the inner side land portion cross sectional area ratio (Pa) is higher than the outer side land portion cross sectional area ratio (Pb),
the inner side land portion cross sectional area ratio (Pa) being a ratio of an annular cross sectional area in a tread annular cross section when the inner side land portion (12a; 42a; 72a) is cut along a plane perpendicular to the tire widthwise direction, to an annular cross sectional area with an area of the widthwise fine grooves (13a; 43a; 73a) added in a tread annular cross section when the inner side land portion (12a; 42a; 72a) is cut along a plane perpendicular to the tire widthwise direction,
the outer side land portion cross sectional area ratio (Pb) being a ratio of an annular cross sectional area in a tread annular cross section when the outer side land portion (12b; 42b; 72b) is cut along a plane perpendicular to the tire widthwise direction, to an annular cross sectional area with an area of the widthwise fine grooves (13b; 43b; 73b) added in a tread annular cross section when the outer side land portion (12b; 42b; 72b) is cut along the plane perpendicular to the tire widthwise direction.

2. The pneumatic tire according to claim 1, wherein the widened groove portion (13ae) of the widthwise fine groove (13a) on the inner side land portion (12a) is smaller in groove width than the widened groove portion (13be) of the widthwise fine groove (13b) on the outer side land portion (12b).

3. The pneumatic tire according to claim 1, wherein the widthwise fine groove (43a) on the inner side land portion (42a) is smaller in number than the widthwise fine groove (43b) on the outer side land portion (42b).

4. The pneumatic tire according to claim 1, wherein the widthwise fine groove (73b) on the outer side land portion (72b) on an outermost side in the tire widthwise direction among the land portions is shaped so as to have a groove width that gradually increases from a tread treading face of an unused tire to a maximum width of the widened groove portion (73be).

5. The pneumatic tire according to claim 1, wherein the pneumatic tire is mounted on a driving wheel of a vehicle.

## Patentansprüche

1. Luftreifen, Folgendes umfassend:
eine Vielzahl von Stegabschnitten (12a, 12b; 42a, 42b; 72a, 72b), die auf einer Lauffläche (7) des Reifens gebildet sind, indem sie durch eine Vielzahl von Umfangsnuten (11i, 11o) unterteilt sind, die sich in einer Umfangsrichtung des Reifens erstrecken, wobei sich die Vielzahl von Stegabschnitten (12a, 12b; 42a, 42b, 72a, 72b) in der Umfangsrichtung des Reifens erstreckt; und
eine Vielzahl von feinen Nuten in Breitenrichtung (13a, 13b; 43a, 43b; 73a, 73b), die auf den Stegabschnitten (12a, 12b; 42a, 42b; 72a, 72b) gebildet sind und die sich in einer Breitenrichtung des Reifens erstrecken, wobei
eine entsprechende der feinen Nuten in Breitenrichtung (13a, 13b; 43a, 43b; 73a, 73b) einen verbreiterten Nutabschnitt (13ae, 13be; 43ae, 43be; 73ae, 73be) aufweist, der auf einem Nutenboden davon bereitgestellt ist und eine vergrößerte Nutenbreite aufweist, und
worin, unter angrenzenden der Stegabschnitte (12a, 12b; 42a, 42b; 72a, 72b) auf einer Seite in der Breitenrichtung des Reifens in Bezug auf eine Reifenäquatorlinie (Le) in einer Mitte in der Breitenrichtung des Reifens, ein entsprechender der Stegabschnitte auf der Seite der Reifenäquatorlinie (Le) als ein innenseitiger Stegabschnitt (12a, 42a; 72a) bestimmt ist und ein entsprechender von den Stegabschnitten auf einer Außenseite in der Breitenrichtung des Reifens als ein außenseitiger Stegabschnitt (12b; 42b; 72b) bestimmt ist,
wobei der Luftreifen **dadurch gekennzeichnet ist, dass**:
wenn ein Querschnittsflächenverhältnis des innenseitigen Stegabschnitts (Pa) und ein Querschnittsflächenverhältnis des außenseitigen Stegabschnitts (Pb) in einem Zustand miteinander verglichen werden, in dem der Reifen bis auf eine Tiefe von 50 % einer Tiefe von einer Kontaktfläche der Lauffläche eines unbenutzten Reifens bis zu einer Endfläche einer Reifenverschleißanzeige (16) abgenutzt ist, das Querschnittsflächenverhältnis des innenseitigen Stegabschnitts (Pa) höher ist als das Querschnittsflächenverhältnis des außenseitigen Stegabschnitts (Pb),
wobei das Querschnittsflächenverhältnis des innenseitigen Stegabschnitts(Pa) ein Verhältnis einer ringförmigen Querschnittsfläche in einem ringförmigen Querschnitt der Lauffläche, wenn der innenseitige Stegabschnitt (12a; 42a; 72a) entlang einer Ebene senkrecht zur Breitenrichtung des Reifens geschnitten wird, zu einer ringförmigen Querschnittsfläche mit einer Fläche der feinen Nuten in Breitenrichtung (13a; 43a; 73a) ist, die in einem ringförmigen Querschnitt der Lauffläche hinzugefügt wird, wenn der innenseitige Stegabschnitt (12a; 42a; 72a) entlang einer Ebene senkrecht zur Breitenrichtung des Reifens geschnitten wird,
wobei das Querschnittsflächenverhältnis des außenseitigen Stegabschnitts (Pb) ein Verhältnis einer ringförmigen Querschnittsfläche in einem ringförmigen Querschnitt der Lauffläche, wenn der außenseitige Stegabschnitt (12b; 42b; 72b) entlang einer Ebene senkrecht zur Breitenrichtung des Reifens geschnitten wird, zu einer ringförmigen Querschnittsfläche mit einer Fläche der feinen Nuten in Breitenrichtung (13b; 43b; 73b) ist, die in einem ringförmigen Querschnitt der Lauffläche hinzugefügt wird, wenn der außenseitige Stegabschnitt (12b; 42b; 72b) entlang der Ebene senkrecht zur Breitenrichtung des Reifens geschnitten wird.

2. Luftreifen nach Anspruch 1, wobei der verbreiterte Nutabschnitt (13ae) der feinen Nut in Breitenrichtung (13a) auf dem innenseitigen Stegabschnitt (12a) eine kleinere Nutenbreite aufweist als die des verbreiterten Nutabschnitts (13be) der feinen Nut in Breitenrichtung (13b) auf dem außenseitigen Stegabschnitt (12b).

3. Luftreifen nach Anspruch 1, wobei die feine Nut in Breitenrichtung (43a) auf dem innenseitigen Stegabschnitt (42a) von einer geringeren Anzahl ist als die feine Nut (43b) in Breitenrichtung auf dem außenseitigen Stegabschnitt (42b).

4. Luftreifen nach Anspruch 1, wobei die feine Nut in Breitenrichtung (73b) auf dem außenseitigen Stegabschnitt (72b) auf einer äußersten Seite in der Breitenrichtung des Reifens unter den Stegabschnitten derart geformt ist, dass sie eine Nutenbreite aufweist, die von einer Kontaktfläche der Lauffläche eines unbenutzten Reifens bis zu einer maximalen Breite des verbreiterten Nutabschnitts (73be) allmählich zunimmt.

5. Luftreifen nach Anspruch 1, wobei der Luftreifen auf einem Antriebsrad eines Fahrzeugs montiert ist.

## Revendications

1. Bandage pneumatique, comprenant :
une pluralité de parties d'appui (12a, 12b ; 42a, 42b ; 72a, 72b) formées sur une bande de roulement (7) du pneumatique en étant divisées par une pluralité de rainures circonférentielles (11i, 11o) qui s'étendent dans une direction circonférentielle du pneumatique, la pluralité de parties d'appui (12a, 12b ; 42a, 42b ; 72a, 72b) s'étendant dans la direction circonférentielle du pneumatique ; et
une pluralité de fines rainures dans le sens de la largeur (13a, 13b ; 43a, 43b ; 73a, 73b) qui sont formées sur les parties d'appui (12a, 12b ; 42a, 42b ; 72a, 72b) et qui s'étendent dans une direction de la largeur du pneumatique, dans lequel
une rainure correspondante des fines rainures dans le sens de la largeur (13a, 13b ; 43a, 43b ; 73a, 73b) comporte une partie de rainure élargie (13ae, 13be ; 43ae, 43be ; 73ae, 73be) fournie sur un fond de rainure de celles-ci et ayant une largeur de rainure accrue, et
où, parmi des parties adjacentes des parties d'appui (12a, 12b ; 42a, 42b ; 72a, 72b), sur un côté dans la direction de la largeur du pneumatique, par rapport à une ligne équatoriale du pneumatique (Le), au milieu, dans la direction de la largeur du pneumatique, une partie correspondante des parties d'appui sur le côté de la ligne équatoriale du pneumatique (Le) est déterminée comme étant une partie d'appui du côté interne (12a ; 42a ; 72a), et une partie correspondante des parties d'appui sur un côté externe, dans la direction de la largeur du pneumatique, est déterminée comme étant une partie d'appui du côté externe (12b ; 42b ; 72b) ;
le pneumatique étant **caractérisé en ce que** :
lorsqu'un rapport d'une aire de section transversale de la partie d'appui du côté interne (Pa) et un rapport d'une aire de section transversale de la partie d'appui du côté externe (Pb) sont comparés l'un avec l'autre dans un état dans lequel le pneumatique est usé jusqu'à une profondeur de 50 % d'une profondeur d'une surface de roulement de la bande de roulement d'un pneumatique neuf jusqu'à une face d'extrémité d'un indicateur d'usure de bande de roulement (16), le rapport de l'aire de section transversale de la partie d'appui du côté interne (Pa) est supérieur au rapport de l'aire de section transversale de la partie d'appui du côté externe (Pb),
le rapport de l'aire de section transversale de la partie d'appui du côté interne (Pa) étant un rapport entre une aire de section transversale annulaire dans une section transversale annulaire de la bande de roulement lorsque la partie d'appui du côté interne (12a ; 42a ; 72a) est coupée le long d'un plan perpendiculaire à la direction de la largeur du pneumatique, et une aire de section transversale annulaire avec une aire des fines rainures dans le sens de la largeur (13a ; 43a ; 73a) ajoutée dans une section transversale annulaire de la bande de roulement lorsque la partie d'appui du côté interne (12a ; 42a ; 72a) est coupée le long d'un plan perpendiculaire à la direction de la largeur du pneumatique.
le rapport de l'aire de section transversale de la partie d'appui du côté externe (Pb) étant un rapport entre une aire de section transversale annulaire dans une section transversale annulaire de la bande de roulement lorsque la partie d'appui du côté externe (12b ; 42b ; 72b) est coupée le long d'un plan perpendiculaire à la direction de la largeur du pneumatique, et une aire de section transversale annulaire avec une aire des fines rainures dans le sens de la largeur (13b ; 43b ; 73b) ajoutée dans une section transversale de la bande de roulement lorsque la parte d'appui du côté externe (12b ; 42b ; 72b) est coupée le long du plan perpendiculaire à la direction de la largeur du pneumatique.

2. Bandage pneumatique selon la revendication 1, dans lequel la partie de rainure élargie (13ae) de la fine rainure dans le sens de la largeur (13a) sur la partie d'appui du côté interne (12a) a une largeur de rainure inférieure à celle de la partie de rainure élargie (13be) de la fine rainure dans le sens de la largeur (13b) sur la partie d'appui du côté externe (12b).

3. Bandage pneumatique selon la revendication 1, dans lequel la fine rainure dans le sens de la largeur (43a) sur la partie d'appui du côté interne (42a) est inférieure en nombre par rapport à la fine rainure dans le sens de la largeur (43b) sur la partie d'appui du côté externe (42b).

4. Bandage pneumatique selon la revendication 1, dans lequel la fine rainure dans le sens de la largeur (73b) sur la partie d'appui du côté externe (72b) sur un côté externe extrême, dans la direction de la largeur du pneumatique, parmi les parties d'appui, est formée de sorte à avoir une largeur de rainure qui est accrue progressivement d'une surface de roulement de la bande de roulement d'un pneumatique neuf vers une largeur maximale de la partie de rainure élargie (73be).

5. Bandage pneumatique selon la revendication 1, où le bandage pneumatique est monté sur une roue motrice d'un véhicule.
